# EUROPÄISCHE PATENTSCHRIFT

(11) **EP 3 289 347 B1**
(45) Veröffentlichungstag und Bekanntmachung des Hinweises auf die Patenterteilung: **16.10.2019**
(21) Anmeldenummer: 16714452.6
(22) Anmeldetag: 06.04.2016
(51) Int. Cl.: G01N 27/406, G01N 27/407, G01N 27/417

(54) **VERFAHREN UND VORRICHTUNG ZUR BESTIMMUNG EINES INNENWIDERSTANDES EINES SENSORELEMENTS**
METHOD AND DEVICE FOR DETERMINING AN INTERNAL RESISTANCE OF A SENSOR ELEMENT
PROCÉDÉ ET APPAREIL POUR LA DETERMINATION DE LA RÉSISTANCE INTERNE D'UN ELEMENT CAPTEUR

(30) Priorität: 29.04.2015 DE 102015207880
(43) Veröffentlichungstag der Anmeldung: 07.03.2018
(73) Patentinhaber: Robert Bosch GmbH, 70442 Stuttgart (DE)
(72) Erfinder: FEY, Michael, 75446 Wiernsheim (DE)
(86) Internationale Anmeldenummer: PCT/EP2016/057536
(87) Internationale Veröffentlichungsnummer: WO 2016/173814

(56) Entgegenhaltungen:
- DE-A1-102008 042 268
- DE-A1-102011 089 383
- DE-T5-112008 001 147
- FISCHER S ET AL: "Detection of NO by pulsed polarization of Pt I YSZ", SOLID STATE IONICS, Bd. 262, 31. Januar 2014 (2014-01-31), Seiten 288-291, XP028855946, ISSN: 0167-2738, DOI: 10.1016/J.SSI.2014.01.022

## Beschreibung

Die vorliegende Erfindung betrifft ein Verfahren und eine Vorrichtung zur Bestimmung eines Innenwiderstandes eines Sensorelements, welches zum Nachweis mindestens eines Anteils einer Messgaskomponente mit gebundenem Sauerstoff in einem Gasgemisch in einem Messgasraum, insbesondere in einem Abgas einer Verbrennungskraftmaschine, eingerichtet ist. Die vorliegenden Erfindung betrifft weiterhin ein Computerprogramm, welches dazu eingerichtet ist, um die Schritte des genannten Verfahrens durchzuführen, ein elektronisches Speichermedium, auf welchem ein derartiges Computerprogramm gespeichert ist, und ein elektronisches Steuergerät, welches ein derartiges elektronisches Speichermedium umfasst.

### Stand der Technik

Aus dem Stand der Technik sind Sensorelemente zum Nachweis mindestens eines Anteils eines Gases in einem Gasgemisch bekannt. Die Erfindung wird im Folgenden, ohne Beschränkung weiterer möglicher Ausgestaltungen, im Wesentlichen unter Bezugnahme auf Vorrichtungen beschrieben, welche zur quantitativen und/oder qualitativen Erfassung mindestens eines Anteils, insbesondere eines Partialdrucks und/oder eines Volumenanteils und/oder eines Massenanteils, eines Gases an einem Gasgemisch dienen. Beispielsweise kann es sich bei dem Gas um ein Abgas einer Verbrennungskraftmaschine handeln, insbesondere im Kraftfahrzeugbereich.

Als Sensorelement zur Erfassung des Gasanteils wird insbesondere eine Lambdasonde eingesetzt. Lambdasonden sind beispielsweise in Konrad Reif, Hrsg., Sensoren im Kraftfahrzeug, 2. Auflage, 2012, Seiten 160-165 beschrieben. Aus dem Stand der Technik sind verschiedene Varianten von Lambda-Sonden bekannt, darunter Lambda-Sonden mit einer Zelle, welche auch als "Zweipunkt-Lambdasonden" bezeichnet werden. Die Zweipunkt-Lambdasonden vergleichen den Restsauerstoffanteil im Abgas mit dem Sauerstoffanteil einer Referenzgas-Atmosphäre, welche sich im Inneren der Sensorvorrichtung als Umluft befinden kann, und zeigen an, ob im Abgas ein fettes Gemisch (d.h. Lambda < 1) oder ein mageres Gemisch (d.h. Lambda > 1) vorliegt. In der Lambda-Sonde mit einer Zelle liegt eine äußere Elektrode an einem Gasraum mit hoher Sauerstoffkonzentration, vorzugsweise an einem Referenzvolumen, an. Zwischen der äußeren Elektrode und einer inneren Elektrode der Zelle wird eine feste Spannung angelegt. Sobald eine Sauerstoffkonzentration in einem Hohlraum nahe 0 ist, steigt ein Nernst-Potenzial stark an und kompensiert teilweise die angelegte Spannung. Auf diese Weise kann mit guter Genauigkeit eine konstante Sauerstoffkonzentration in dem Hohlraum eingeregelt werden.

Aus verschiedenen Gründen kann es vorteilhaft sein, den Innenwiderstand des Sensorelements zu kennen, insbesondere da der Innenwiderstand des Sensorelements einen Einfluss auf verschiedene Eigenschaften des Sensorelements und/oder auf ein von dem Sensorelement ermittelten Messgrößen zurückgreifendes Motorsteuerungssystem haben kann. Beispielhaft seien in diesem Zusammenhang elektrische Diagnosen des Sensorelements, eine Erkennung einer Betriebsbereitschaft des Sensorelements und eine Stabilisierung der Temperatur des Sensorelements genannt.

Zur Bestimmung des Innenwiderstandes des Sensorelements wird gemäß dem Stand der Technik das Sensorelement mit einem Strompuls beaufschlagt. Unter dem auch als "Messpuls" bezeichneten "Strompuls" wird hierbei insbesondere eine sprunghafte Erhöhung des Stroms, welcher durch die erste Elektrode, den die erste Elektrode und die zweite Elektrode verbindenden Festelektrolyten und durch die zweite Elektrode des Sensorelements fließt, verstanden. Durch eine hierdurch hervorgerufene Strombelastung des Sensorelements wird ein Auftreten einer Ladungsverschiebung in dem Sensorelement bewirkt, wobei das Auftreten der Ladungsverschiebung in dem Sensorelement eine Erhöhung einer zwischen der ersten Elektrode und der zweiten Elektrode anliegenden elektrischen Spannung verursachen kann. Aus dem beobachteten Verlauf der elektrischen Spannung zwischen der ersten Elektrode und der zweiten Elektrode unmittelbar nach der Beaufschlagung des Sensorelements mit dem Strompuls kann ein Wert für die Erhöhung der elektrischen Spannung in Folge der Beaufschlagung des Sensorelements mit dem Strompuls ermittelt werden.

Gemäß dem Stand der Technik lässt sich der Innenwiderstand des Sensorelements dadurch bestimmen, dass die Spannung zwischen der ersten Elektrode und der zweiten Elektrode des Sensorelements jeweils mit der beschriebenen Strombelastung und ohne die beschriebene Strombelastung zueinander in Beziehung gesetzt wird. Allerdings führt die Beaufschlagung des Sensorelements mit dem Strompuls auch zu dem oben beschriebenen Auftreten der Ladungsverschiebung in dem Sensorelement. Da die Zelle in dem Sensorelement auch stets einen kapazitiven Anteil aufweist, kann somit der Strompuls zu einer zusätzlichen Erhöhung der an der Zelle anliegenden Spannung führen, welche für den Fachmann aus einer Aufladung bzw. Entladung eines Kondensators bekannt ist. Diese zusätzliche Spannungserhöhung in der Zelle kann jedoch zu einer Abweichung des bestimmten Wertes für den Innenwiderstand des Sensorelements von dem tatsächlichen Wert für den Innenwiderstand des Sensorelements führen.

Aus diesem Grunde ist es daher vorteilhaft, den Verlauf der elektrischen Spannung zwischen der ersten Elektrode und der zweiten Elektrode des Sensorelements unter Strombelastung möglichst kurz nach einem Einsetzen der Strombelastung an dem Sensorelement zu erfassen. In der Praxis lässt sich diese vorteilhafte Vorgehensweise jedoch nicht durchführen, da das Sensorelement, insbesondere die Lambdasonde, in der Regel über ein Tiefpassfilter an das zugehörige Motorsteuerungssystem angeschlossen ist, vor allem um eine Übertragung von hochfrequenten Signalstörungen aus dem Motorsteuerungssystem zu dem Sensorelement möglichst weitgehend zu unterdrücken. In der Praxis wird daher die zwischen der ersten Elektrode und der zweiten Elektrode anliegende elektrische Spannung unter Strombelastung typischerweise erst drei Millisekunden nach dem Beginn der Strombelastung erfasst. Obwohl die während dieser drei Millisekunden auftretende Ladungsverschiebung in dem Sensorelement das Ergebnis der Bestimmung des Innenwiderstandes des Sensorelements beeinflussen kann, bleibt dieser Effekt bei der Ermittlung des Innenwiderstands gemäß dem Stand der Technik unberücksichtigt.

### Offenbarung der Erfindung

Es werden daher ein Verfahren und eine Vorrichtung zur Bestimmung eines Innenwiderstandes eines Sensorelements vorgeschlagen, welche die Nachteile der bekannten Verfahren und Vorrichtungen zumindest weitgehend vermeidet. Das Verfahren und die Vorrichtung werden durch die beigefügten Ansprüche definiert.

Das Sensorelement umfasst hierbei mindestens eine Zelle, wobei die Zelle über mindestens eine erste Elektrode, mindestens eine zweite Elektrode und mindestens einen die erste Elektrode und die zweite Elektrode verbindenden Festelektrolyten verfügt. Die beiden Elektroden sind bevorzugt aus Zirkoniumdioxid gefertigt. In einer bevorzugten Ausgestaltung steht die erste Elektrode hierbei über eine poröse Schutzschicht mit dem Messgasraum in Verbindung, während die zweite Elektrode in einem Elektrodenhohlraum angeordnet ist, welcher vorzugsweise über mindestens eine Diffusionsbarriere mit Gas aus dem Messgasraum beaufschlagt wird. Wie eingangs beschrieben, wird zwischen der ersten Elektrode und der zweiten Elektrode der Zelle eine feste Spannung angelegt. Sobald eine Sauerstoffkonzentration in dem Elektrodenhohlraum nahe 0 ist, steigt ein Nernst-Potenzial stark an und kompensiert teilweise die angelegte Spannung. Auf diese Weise kann mit guter Genauigkeit eine konstante Sauerstoffkonzentration in dem Elektrodenhohlraum eingeregelt werden.

In einem ersten Aspekt betrifft die vorliegende Erfindung somit ein Verfahren zur Bestimmung des Innenwiderstandes des Sensorelements. Dieses Verfahren umfasst die Verfahrensschritte a) bis c), welche vorzugsweise in der dargestellten Reihenfolge, beginnend mit Schritt a) und endend mit Schritt c), durchgeführt werden können. Allerdings ist es hierbei ebenfalls möglich, die einzelnen Schritte teilweise auch gleichzeitig durchzuführen. Darüber hinaus wird, wie unten näher erläutert, hierbei gefordert, dass die Schritte a) und b) mindestens zwei Mal durchgeführt werden, bevor Schritt c) ausgeführt wird.

Gemäß Schritt a) wird das vorliegende Sensorelement mit einem Strompuls beaufschlagt. Wie eingangs bereits beschrieben, bezeichnet der Begriff des "Strompulses" oder "Messpulses" eine sprungförmige Erhöhung des an der Zelle anliegenden Wertes für den Strom über das vor dem Anliegen des Strompulses und nach dem Ende des Strompulses übliche Maß. Der Strompuls gemäß Schritt a) ist somit stets als eine zusätzliche Zuführung von Ladungen in die Zelle über die Dauer des Strompulses zu betrachten. Folglich führt der Strompuls zu einem Auftreten einer Ladungsverschiebung in dem Sensorelement. Wie dem Fachmann bekannt ist, bewirkt das Auftreten der Ladungsverschiebung in dem Sensorelement eine Erhöhung der elektrischen Spannung zwischen der ersten Elektrode und der zweiten Elektrode der Zelle. Der dadurch erhöhte Wert für die elektrische Spannung zwischen der ersten Elektrode der Zelle wird gemäß Schritt b) des vorliegenden Verfahrens ermittelt.

Im Unterschied zu den aus dem Stand der Technik bekannten Verfahren zur Bestimmung des Innenwiderstandes des Sensorelements wird hier jedoch vorgeschlagen, den beschriebenen Schritt b) mindestens zweimal, vorzugsweise zweimal oder dreimal, hintereinander zu jeweils unterschiedlichen Zeitpunkten während des Auftretens der Ladungsverschiebung durchzuführen und zu den betreffenden Zeitpunkten hieraus jeweils einen Wert für die Erhöhung der elektrischen Spannung zu ermitteln. Aus den zu den mindestens zwei unterschiedlichen Zeitpunkten während des Auftretens der Ladungsverschiebung ermittelten Werten für die Erhöhung der elektrischen Spannung lässt sich gemäß Schritt c) nunmehr der Innenwiderstand des Sensorelements bestimmen.

Da der während Schritt a) auf die Zelle des Sensorelements einwirkende Strompuls nach seinem Einsetzen zunächst einen Aufbau der Ladungsverschiebung in dem Sensorelement hervorruft und nach seinem Ende dann einen Abbau der zuvor erzeugten Ladungsverschiebung bewirkt, ist es besonders vorteilhaft, die unterschiedlichen Zeitpunkte für die Ermittlung des Wertes für die Erhöhung der elektrischen Spannung in der Zelle entweder nur auf den Zeitraum des Aufbaus der Ladungsverschiebung oder auf den Zeitraum des Abbaus der Ladungsverschiebung zu legen. Auf diese Weise kann sichergestellt werden, dass derselbe, den Innenwiderstand des Sensorelements beeinflussende physikalische Effekt berücksichtigt wird.

Erfindungsgemäß wird das mindestens zweimalige Erfassen des Wertes für die Erhöhung der elektrischen Spannung in der Zelle dafür eingesetzt, um hieraus einen polarisationsbedingten Anteil der Erhöhung der elektrischen Spannung in der Zelle zu ermitteln. Der polarisationsbedingte Anteil ergibt sich während der Strombelastung des Sensorelements aus der oben beschriebenen zusätzlichen Spannungserhöhung, analog zu einer Auflade- bzw. Entladekurve eines Kondensators. Durch die Ermittlung des polarisationsbedingten Anteils der Erhöhung der elektrischen Spannung während der Strombelastung ist es möglich, den polarisationsbedingten Anteil von einem Gesamtwert für die Erhöhung der elektrischen Spannung, welcher gemäß Schritt b) ermittelt wird, zu subtrahieren, um auf diese Weise lediglich einen ohmschen Anteil der Erhöhung der elektrischen Spannung in der Zelle zu bestimmen. Mit diesem ohmschen Anteil der Erhöhung der elektrischen Spannung in der Zelle wird eine genauere Bestimmung des ohmschen Innenwiderstands des Sensorelements durchgeführt. Hieraus ergibt sich zugleich auch eine Definition für den Begriff des "Innenwiderstandes" des Sensorelements, welcher als ohmscher Wert für eine an dem Sensorelement anliegende Spannung bei Beaufschlagung des Sensorelements mit einem Strom betrachtet werden kann, wobei weitere, die Spannung des Sensorelements beeinflussende Effekte, insbesondere eine dadurch ebenfalls hervorgerufene Polarisation des Sensorelements, außer Betracht bleiben.

Insbesondere kann aus den zu den unterschiedlichen Zeitpunkten während des Auftretens der Ladungsverschiebung ermittelten Werten für die Erhöhung der elektrischen Spannung in der Zelle eine Zeitkonstante, welche einen Verlauf des Auftretens der Ladungsverschiebung in dem Sensorelement beschreibt, ermittelt werden. Unter dem Begriff der "Zeitkonstante" wird hierbei eine charakteristische Größe in Bezug auf eine mögliche Polarisation des Sensorelements verstanden, welche in Analogie zu der bekannten Aufladung eines Kondensators bei Vorliegen einer Reihenschaltung zwischen dem Kondensator und einem elektrischen Widerstand das Produkt aus dem Wert für den elektrischen Widerstand und dem Wert der Kapazität des Kondensators darstellt. Folglich lässt sich aus dem vorzugsweise exponentiellen zeitlichen Verlauf der an der Zelle anliegenden Spannung während der Ladungsverschiebung der polarisationsbedingte Anteil an der Erhöhung der Spannung in der Zelle während der Strombelastung approximieren. Der auf diese Weise ermittelte Wert für den polarisationsbedingten Anteil der Erhöhung der elektrischen Spannung in der Zelle kann, wie oben beschrieben, folglich zur genaueren Bestimmung des Wertes für den Innenwiderstand des Sensorelements eingesetzt werden. Hierbei ist es insbesondere vorteilhaft, die mindestens eine Zeitkonstante für das Auftreten der Ladungsverschiebung in dem Sensorelement während eines Zeitraums zu bestimmen, in welchem ein Einfluss von weiteren Faktoren auf die elektrische Spannung in der Zelle ausgeschlossen oder vernachlässigt werden kann. Folglich sollte die Bestimmung des Innenwiderstandes des Sensorelements vorzugsweise in dem Zeitraum vorgenommen werden, in welchem ein möglichst konstanter Lambda-Wert herrscht.

Da bei einer bestimmten Temperatur des Sensorelements der hierbei beobachtbare Wert für die Polarisation der Zelle in der Regel konstant bleibt, kann davon ausgegangen werden, dass sich bei zwei gemäß dem vorgeschlagenen Verfahren durchgeführten aufeinanderfolgenden Messungen des Innenwiderstandes des Sensorelements, welche bei derselben Temperatur des Sensorelements erfolgen, der Wert des Innenwiderstandes des Sensorelements nicht ändert. Diese Beobachtung kann daher zum einen dafür eingesetzt werden, um ggf. nicht plausible Messwerte zu eliminieren, und zum anderen, um eine Genauigkeit der Bestimmung der Zeitkonstanten durch eine Mittelung von Ergebnissen aus mehreren einzelnen Bestimmungen des Innenwiderstandes des Sensorelements gemäß Schritt c) zu erhöhen.

Ebenso kann mindestens eine, früher bestimmte Zeitkonstante für eine spätere Bestimmung des Innenwiderstandes des Sensorelements eingesetzt werden. Dadurch ist es nicht länger erforderlich, die oben beschriebene Zeitkonstante bei jeder einzelnen Bestimmung erneut zu ermitteln. Es kann stattdessen vorteilhaft sein, den polarisationsbedingten Anteil der Erhöhung der elektrischen Spannung in der Zelle auch mittels einer in einer früheren Messung bestimmten Zeitkonstante zu approximieren. Hierzu kann es vorgesehen sein, mindestens eine ermittelnde Zeitkonstante in einem elektronischen Speichermedium, welche vorteilhaft in dem Motorsteuerungssystem angeordnet sein kann, zu speichern. Auf diese Weise wird ermöglich, auch zu einem späteren Zeitpunkt eine Bestimmung des Innenwiderstandes des Sensorelements vornehmen zu können, ohne hierzu erneut die Zeitkonstante bestimmen zu müssen.

In einer bevorzugten Ausgestaltung wird eine Dauer des Strompulses, mit welchem das Sensorelement beaufschlagt wird, derart eingestellt, dass die Dauer des Strompulses die Länge der Zeitkonstanten, welche für das Auftreten der Ladungsverschiebung in dem Sensorelement ermittelt wird, übersteigt. Aus diesem Grunde kann es daher sinnvoll sein, die Strombelastung des Sensorelements einmalig oder in bestimmten Abständen über einen längeren Zeitraum zu aktivieren, insbesondere dann, wenn der Wert für die Zeitkonstante die sonst übliche Dauer der Strombelastung an der Zelle übersteigt. Da hierdurch eine Erhöhung der Polarisation in der Zelle hervorgerufen werden kann, kann es, wie in der DE 10 2012 200 038 A1 beschrieben, besonders vorteilhaft sein, eine anschließende Strombelastung in umgekehrter Richtung, welcher auch als "Gegenpuls" bezeichnet werden kann, entsprechend zu verlängern, um auf diese Weise insgesamt die Polarisation in der Zelle des Sensorelements nach einem Beenden der beschriebenen Strompulssequenz möglichst schnell abzubauen.

Wie eingangs bereits beschrieben, kann das Sensorelement über ein Tiefpassfilter mit einer Steuerungseinheit, insbesondere einem Motorsteuerungssystem, verbunden sein. Wie in diesem Zusammenhang bereits erwähnt, verfügt das Tiefpassfilter ebenfalls über eine zugehörige Zeitkonstante, welche der Fachmann aus den entsprechend ermittelten elektrischen Größen leicht ableiten kann. Aus einer Beobachtung, dass eine Dauer eines Einschwingvorgangs der an der Zelle anliegenden Spannung in Folge der Ladungsverschiebung durch die Strombelastung des Sensorelements in der Regel deutlich länger, d. h. typischerweise mehrere Millisekunden, ist als die Zeitkonstante des Tiefpassfilters, welche typischerweise in einen Bereich von 0,1 Millisekunden bis 0,5 Millisekunden liegt, kann daher geschlossen werden, dass es vorteilhaft sein kann, die unterschiedlichen Zeitpunkte zur Ermittlung des Wertes für die Erhöhung der elektrischen Spannung in der Zelle während des Aufbaus bzw. des Abbaus der Polarisation der Zelle so zu wählen, dass hierbei ein Einfluss des Tiefpassfilters auf den Messwert möglichst weitgehend vernachlässigt werden kann. Hierzu kann es insbesondere vorgesehen sein, dass der erste Zeitpunkt für die Ermittlung des Wertes für die Erhöhung der elektrischen Spannung in der Zelle gemäß Schritt b) nach Ablauf mindestens des dreifachen, vorzugsweise mindestens des fünffachen, der Zeitkonstante des Tiefpassfilters nach dem Beginn oder dem Ende der Strombelastung durchgeführt wird.

In einem weiteren Aspekt umfasst die vorliegende Erfindung ein Computerprogramm, welches dazu eingerichtet ist, um die Schritte des beschriebenen Verfahrens durchzuführen.

In einem weiteren Aspekt betrifft die vorliegende Erfindung ein elektronisches Speichermedium, welches dazu eingerichtet ist, um ein derart ausgestattetes Computerprogramm zu speichern. In einer bevorzugten Ausgestaltung ist das elektronische Speichermedium insbesondere dazu eingerichtet, um mindestens einen gemäß dem oben beschriebenen Verfahren bestimmten Wert für eine Zeitkonstante für ein Auftreten einer Ladungsverschiebung in einem Sensorelement zu speichern. Dieser ermittelte Wert kann hierbei in vorteilhafter Weise für eine spätere Verwendung der Zeitkonstante in dem Verfahren herangezogen werden, ohne dass der Wert für die Zeitkonstante erneut bestimmt werden muss.

In einem weiteren Aspekt betrifft die vorliegende Erfindung eine Steuerungseinheit, insbesondere ein Motorsteuerungssystem, welche dazu eingerichtet ist, um ein elektronisches Speichermedium zu umfassen, auf welchem vorzugsweise ein Computerprogramm gespeichert ist, welches dazu eingerichtet ist, um die Schritte des beschriebenen Verfahrens durchzuführen und um gegebenenfalls auch weitere Werte, insbesondere mindestens eine Zeitkonstante für ein Auftreten einer Ladungsverschiebung in dem Sensorelement, zu speichern.

In einem weiteren Aspekt betrifft die vorliegende Erfindung eine Vorrichtung zur Erfassung eines Anteils einer Gaskomponente aus einem Gasgemisch in einem Messgasraum, wobei die Vorrichtung ein oben beschriebenes Sensorelement aufweist, welches über mindestens eine Zelle verfügt, wobei die Zelle mindestens eine erste Elektrode, mindestens eine zweite Elektrode und mindestens einen die erste Elektrode und die zweite Elektrode verbindenden Festelektrolyten umfasst. Darüber hinaus umfasst die Vorrichtung weiterhin eine ebenfalls oben beschriebene Steuerungseinheit, insbesondere ein Motorsteuerungssystem. In diesem Zusammenhang wird darauf hingewiesen, dass die Vorrichtung sowohl in einteiliger Form als auch, bevorzugt, in mehrteiliger Form ausgestaltet sein kann, insbesondere dahingehend, dass das Sensorelement als separates Element ausgestaltet ist, welches über geeignete elektrische Verbindungen mit der ebenfalls als separater Einheit ausgestalteten Steuerungseinheit in wechselseitigem Kontakt steht.

### Vorteile der Erfindung

Das hier beschriebene Verfahren und eine zur Durchführung des Verfahrens eingerichtete Vorrichtung ermöglichen es, den Innenwiderstand des Sensorelements, insbesondere der Lambdasonde, mit einer höheren Genauigkeit zu bestimmen. Damit lassen sich auch Funktionen und Effekte, welche auf dem Innenwiderstand des Sensorelements beruhen, mit einer erhöhten Genauigkeit ermitteln. Insbesondere kann auf diese Weise die Temperatur des Sensorelements genauer eingestellt werden, was zum einen die Genauigkeit des Signals, welches von dem Sensorelement bereitgestellt wird, erhöht und zum anderen ein Risiko einer Beschädigung des Sensorelements durch eine mögliche Überhitzung verringert, wodurch sich in vorteilhafter Weise auch die Lebensdauer des Sensorelements verlängern lässt.

Das vorliegende Verfahren lässt sich hierbei insbesondere in unterschiedlichen Arten von Sensorelementen, insbesondere in verschiedenen Typen von Lambdasonden, vorzugsweise von Zweipunkt-Lambdasonden, einsetzen. Es bestehen auch keine Einschränkungen in Bezug auf die zu wählende Steuerungseinheit für das Sensorelement oder in Hinblick auf ein damit auszustattendes Fahrzeug.

### Kurze Beschreibung der Figuren

Bevorzugte Ausführungsbeispiele der vorliegenden Erfindung sind in den Figuren dargestellt und werden in der nachfolgenden Beschreibung näher erläutert. Hierbei zeigen im Einzelnen:
- Figur 1: eine schematische Darstellung einer elektrischen Beschaltung eines Sensorelements, dessen Innenwiderstand mittels des vorliegenden Verfahrens bestimmt werden kann; und
- Figur 2: eine schematische Darstellung des zeitlichen Verlaufs der elektrischen Spannung zwischen der ersten Elektrode und der zweiten Elektrode des Sensorelements.

### Ausführungsformen der Erfindung

Im Folgenden wird das erfindungsgemäße Verfahren zur Bestimmung eines Innenwiderstandes eines Sensorelements exemplarisch an einem Sensorelement beschrieben, welche zur Erfassung eines Anteils an Sauerstoff in einem Abgas einer Verbrennungskraftmaschine eingerichtet ist, insbesondere an einer Lambda-Sonde mit einer Zelle.

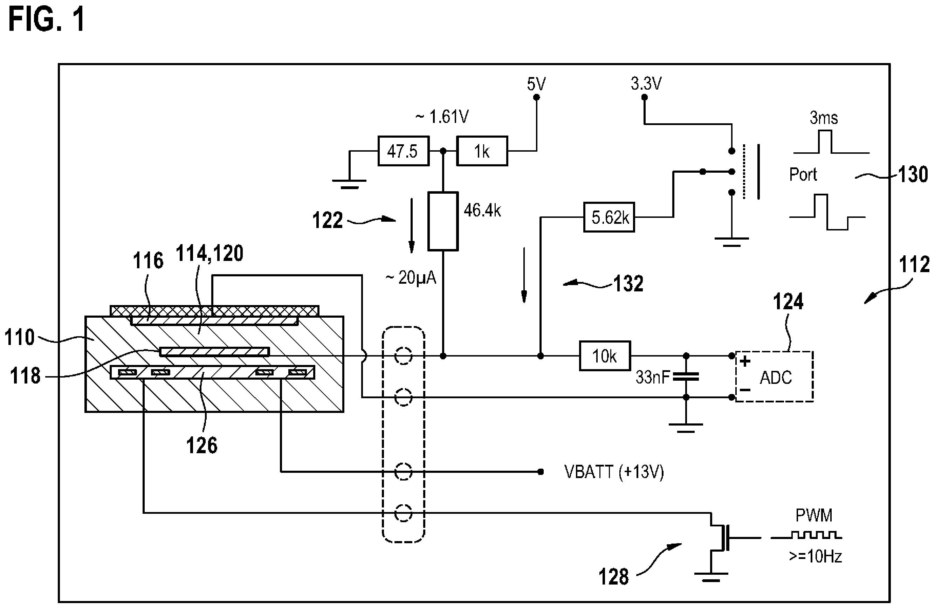

Figur 1 zeigt schematisch ein Sensorelement 110 zur Erfassung eines Anteils einer Gaskomponente aus einem Gasgemisch in einem Messgasraum sowie die zugehörige elektrische Beschaltung 112. Das hier exemplarisch dargestellte Sensorelement 110 verfügt über eine Zelle 114, welche eine erste Elektrode 116, eine zweite Elektrode 118 und einen die erste Elektrode 116 und die zweite Elektrode 118 verbindenden Festelektrolyten 120 aufweist. Durch Anlegen eines Stroms 122 an die Zelle 114 lässt sich zwischen der ersten Elektrode 116 und der zweiten Elektrode 118 eine elektrische Spannung 124 mittels einer geeigneten Spannungsnachweiseinrichtung bestimmen. Das hier dargestellte Sensorelement 110 verfügt darüber hinaus über ein Heizelement 126, welches mittels einer zugehörigen Heizsteuerung 128 in der Weise betrieben werden kann, dass sich damit die Temperatur des Sensorelements 110 einstellen lässt.

Gemäß Schritt a) des Verfahrens zur Bestimmung des Innenwiderstandes des Sensorelements 110 wird das Sensorelement 110 mit einem Strompuls 130 beaufschlagt, welcher von einer hierzu eingerichteten Pulserzeugungseinheit 132 bereitgestellt und zusätzlich zu dem Strom 122 auf die Zelle 114 gegeben wird. Das Beaufschlagen des Sensorelements 110 mit dem Strompuls 130 bewirkt ein Auftreten einer Ladungsverschiebung in dem Sensorelement 110, welches sich in einer messbaren Erhöhung der elektrischen Spannung 124 in der Zelle 114 zwischen der ersten Elektrode 116 und der zweiten Elektrode 118 äußert.

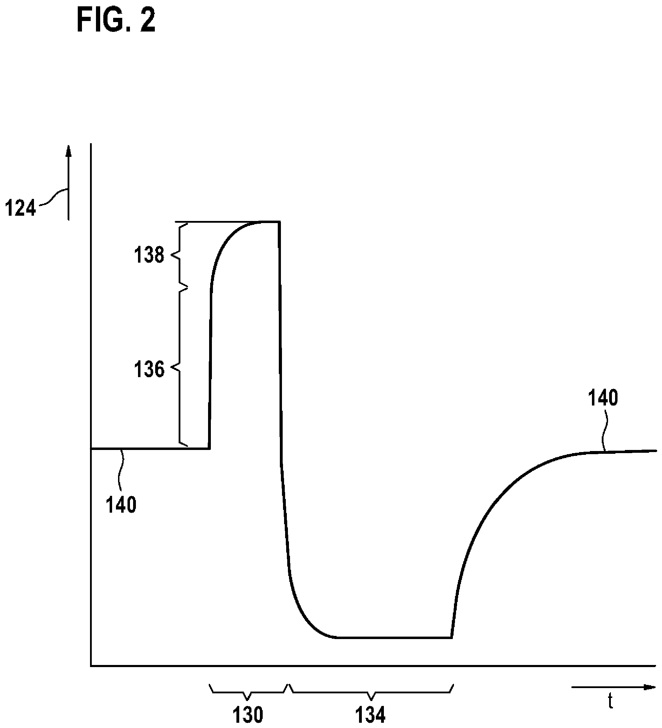

Gemäß Schritt b) wird nun mindestens zweimal zu unterschiedlichen Zeitpunkten während des Auftretens der Ladungsverschiebung jeweils ein Wert für die Erhöhung der elektrischen Spannung 124 in der Zelle 114 zwischen der ersten Elektrode 116 und der zweiten Elektrode 118 ermittelt. Hieraus lässt sich gemäß Schritt c), wie insbesondere aus der nachfolgenden Figur 2 näher hervorgeht, der Innenwiderstand des Sensorelements 110 bestimmen.

In Figur 2 ist schematisch der zeitliche Verlauf der elektrischen Spannung 124 in der Zelle 114 zwischen der ersten Elektrode 116 und der zweiten Elektrode 118 des Sensorelements 110 dargestellt. Hierbei wurde das Sensorelement 110 mit einem Strompuls 130 und anschließend mit einem Gegenpuls 134 beaufschlagt. Die Beaufschlagung des Sensorelements 110 mit dem Gegenpuls 134 wurde bevorzugt daher ausgeführt, um die durch die Beaufschlagung des Sensorelements 110 mit dem Strompuls 130 versursachte der Polarisation des Sensorelements 110, insbesondere der Zelle 114, möglichst umgehend zu beseitigen.

Der in Figur 2 dargestellte zeitliche Verlauf der elektrischen Spannung 124 der Zelle 114 umfasst während des Strompulses 130 sowohl einen ohmschen Anteil 136 als auch einen polarisationsbedingten Anteil 138 für die Erhöhung der elektrischen Spannung 124 gegenüber einem Wert 140 vor bzw. nach dem Anlegen der Pulssequenz. Aus der Form des zeitlichen Verlaufs der elektrischen Spannung 124 des Sensorelements 110 während des Strompulses 130 lässt sich in Folge einer Analogie eines Verhaltens der Zelle mit einem elektrischen Kondensator eine Zeitkonstante für das Auftreten der Ladungsverschiebung in dem Sensorelement 110, insbesondere in der Zelle 114, ermitteln. Wie oben dargelegt, entspricht für diesen Fall die Zeitkonstante dem Produkt aus dem Wert des Innenwiderstandes und der Kapazität des Sensorelements 110. Mittels einer Approximation lässt sich hierdurch der Wert für die Kapazität des Sensorelements 110, insbesondere der Zelle 114, ermitteln, woraus sich der polarisationsbedingte Anteil 138 für die Erhöhung der elektrischen Spannung 124 während des Strompulses 130 bestimmen lässt. Der Innenwiderstand des Sensorelements 110 ergibt sich schließlich durch eine Subtraktion des polarisationsbedingten Anteils 138 von der gesamten Erhöhung der elektrischen Spannung 124, aus welcher der gesuchte ohmsche Anteil 136 für den Innenwiderstand des Sensorelements 110 bestimmt werden kann.

## Patentansprüche

1. Verfahren zur Bestimmung eines Innenwiderstandes eines Sensorelements (110) zur Erfassung eines Anteils einer Gaskomponente aus einem Gasgemisch in einem Messgasraum, wobei das Sensorelement (110) über mindestens eine Zelle (114) verfügt, wobei die Zelle (114) mindestens eine erste Elektrode (116), mindestens eine zweite Elektrode (118) und mindestens einen die erste Elektrode (116) und die zweite Elektrode (118) verbindenden Festelektrolyten (120) umfasst, wobei zwischen der ersten Elektrode (116) und der zweiten Elektrode (118) eine elektrische Spannung (124) anliegt, mit den Schritten:
a) Beaufschlagen des Sensorelements (110) mit einem Strompuls (130), wobei der Strompuls (130) ein Auftreten einer Ladungsverschiebung in dem Sensorelement (110) bewirkt, wobei das Auftreten der Ladungsverschiebung eine Erhöhung der elektrischen Spannung (124) zwischen der ersten Elektrode (116) und der zweiten Elektrode (118) hervorruft;
b) Ermitteln eines Wertes für die Erhöhung der elektrischen Spannung (124) zwischen der ersten Elektrode (116) und der zweiten Elektrode (118);
**wobei der** Schritt b) mindestens zweimal zu unterschiedlichen Zeitpunkten während des Auftretens der Ladungsverschiebung durchgeführt wird und hieraus zu den unterschiedlichen Zeitpunkten jeweils ein Wert für die Erhöhung der elektrischen Spannung (124) ermittelt wird, und Schritt c)
**gekennzeichnet dadurch, dass** dieser wie folgt durchgeführt wird:
c) Bestimmen des Innenwiderstandes des Sensorelements (110) aus den zu den unterschiedlichen Zeitpunkten während des Auftretens der Ladungsverschiebung ermittelten Werten für die Erhöhung der elektrischen Spannung (124);
und wobei aus den zu den unterschiedlichen Zeitpunkten während des Auftretens der Ladungsverschiebung ermittelten Werten für die Erhöhung der elektrischen Spannung (124) ein polarisationsbedingter Anteil (138) der Erhöhung der elektrischen Spannung (124) ermittelt wird, wobei der Innenwiderstand des Sensorelements (110) durch eine Subtraktion des polarisationsbedingten Anteils (138) der Erhöhung der elektrischen Spannung (124) von den ermittelten Werten für die Erhöhung der elektrischen Spannung (124) bestimmt wird.

2. Verfahren nach einem der vorangehenden Ansprüche, **dadurch gekennzeichnet, dass** aus den zu den unterschiedlichen Zeitpunkten während des Auftretens der Ladungsverschiebung ermittelten Werten für die Erhöhung der elektrischen Spannung (124) eine Zeitkonstante für das Auftreten der Ladungsverschiebung in dem Sensorelement (110) bestimmt wird.

3. Verfahren nach dem vorangehenden Anspruch, **dadurch gekennzeichnet, dass** die Zeitkonstante für die Ladungsverschiebung in dem Sensorelement (110) während eines Zeitraums bestimmt wird, während dessen ein Einfluss von weiteren Faktoren auf die elektrischen Spannung (124) zwischen der ersten Elektrode (116) und der zweiten Elektrode (128) vernachlässigbar oder ausgeschlossen ist.

4. Verfahren nach einem der beiden vorangehenden Ansprüche, **dadurch gekennzeichnet, dass** die für das Auftreten der Ladungsverschiebung in dem Sensorelement (110) bestimmte Zeitkonstante in einem elektronischen Speichermedium gespeichert und für mindestens ein nachfolgendes Bestimmen des Innenwiderstandes des Sensorelements (110) verwendet wird.

5. Verfahren nach einem der drei vorangehenden Ansprüche, **dadurch gekennzeichnet, dass** eine Zeitdauer des Strompulses (130), mit welchem das Sensorelement (110) beaufschlagt wird, derart eingestellt wird, dass die Zeitdauer des Strompulses (130) eine Länge der Zeitkonstante für das Auftreten der Ladungsverschiebung in dem Sensorelement (110) übersteigt.

6. Verfahren nach einem der vorangehenden Ansprüche, **dadurch gekennzeichnet, dass** das Sensorelement (110) über ein Tiefpassfilter mit einer Steuerungseinheit verbunden ist, wobei das Tiefpassfilter eine zugehörige Zeitkonstante aufweist, wobei ein erster Zeitpunkt für eine Ermittlung eines ersten Wertes für die Erhöhung der elektrischen Spannung (124) so gewählt wird, dass der erste Zeitpunkt mindestens dem dreifachen, vorzugsweise mindestens dem fünffachen, der Zeitkonstante des Tiefpassfilters entspricht.

7. Computerprogramm, welches dazu eingerichtet ist, um die Schritte des Verfahrens nach einem der vorangehenden Ansprüche durchzuführen.

8. Elektronisches Speichermedium, auf welchem ein Computerprogramm nach dem vorangehenden Anspruch gespeichert ist.

9. Elektronisches Speichermedium nach dem vorangehenden Anspruch, auf welchem mindestens ein gemäß dem Verfahren nach einem der Ansprüche 3 bis 6 bestimmter Wert für eine Zeitkonstante für ein Auftreten einer Ladungsverschiebung in einem Sensorelement (110) gespeichert ist.

10. Steuerungseinheit, welche ein elektronisches Speichermedium nach einem der beiden vorangehenden Ansprüche umfasst.

11. Vorrichtung zur Erfassung eines Anteils einer Gaskomponente aus einem Gasgemisch in einem Messgasraum, umfassend ein Sensorelement (110), welches über mindestens eine Zelle (114) verfügt, wobei die Zelle (114) mindestens eine erste Elektrode (116), mindestens eine zweite Elektrode (118) und mindestens einen die erste Elektrode (116) und die zweite Elektrode (118) verbindenden Festelektrolyten (120) umfasst, wobei die Vorrichtung weiterhin eine Steuerungseinheit gemäß dem vorangehenden Anspruch aufweist.

## Claims

1. Method for determining an internal resistance of a sensor element (110) for detecting a proportion of a gas component from a gas mixture in a measuring gas chamber, the sensor element (110) having at least one cell (114), the cell (114) comprising at least a first electrode (116), at least a second electrode (118) and at least a solid electrolyte (120) connecting the first electrode (116) and the second electrode (118), an electrical voltage (124) being present between the first electrode (116) and the second electrode (118), comprising the steps:
a) applying a current pulse (130) to the sensor element (110), the current pulse (130) effecting an occurrence of a charge displacement in the sensor element (110), the occurrence of the charge displacement causing an increase in the electrical voltage (124) between the first electrode (116) and the second electrode (118);
b) ascertaining a value for the increase in the electrical voltage (124) between the first electrode (116) and the second electrode (118);
the step b) being carried out at least twice at different times during the occurrence of the charge displacement and, from this, in each case a value for the increase in the electrical voltage (124) being ascertained at the different times, and step c),
**characterized in that** the latter is carried out as follows:
c) determining the internal resistance of the sensor element (110) from the values for the increase in the electrical voltage (124) ascertained at the different times during the occurrence of the charge displacement;
and wherein, from the values for the increase in the electrical voltage (124) ascertained at the different times during the occurrence of the charge displacement, a polarization-induced proportion (138) of the increase in the electrical voltage (124) is ascertained, wherein the internal resistance of the sensor element (110) is determined by subtracting the polarization-induced proportion (138) of the increase in the electrical voltage (124) from the ascertained values for the increase in the electrical voltage (124).

2. Method according to one of the preceding claims, **characterized in that**, from the values for the increase in the electrical voltage (124) ascertained at the different times during the occurrence of the charge displacement, a time constant for the occurrence of the charge displacement in the sensor element (110) is determined.

3. Method according to the preceding claim, **characterized in that** the time constant for the charge displacement in the sensor element (110) is determined during a time period during which an influence of further factors on the electrical voltage (124) between the first electrode (116) and the second electrode (128) is negligible or ruled out.

4. Method according to one of the two preceding claims, **characterized in that** the time constant determined for the occurrence of the charge displacement in the sensor element (110) is stored in an electronic storage medium and is used for at least one subsequent determination of the internal resistance of the sensor element (110).

5. Method according to one of the three preceding claims, **characterized in that** a time period of the current pulse (130) which is applied to the sensor element (110) is adjusted in such a way that the time period of the current pulse (130) exceeds a length of the time constant for the occurrence of the charge displacement in the sensor element (110).

6. Method according to one of the preceding claims, **characterized in that** the sensor element (110) is connected via a low-pass filter to a control unit, wherein the low-pass filter has an associated time constant, wherein a first time for ascertaining a first value for the increase in the electrical voltage (124) is chosen such that the first time corresponds to at least three times, preferably at least five times, the time constant of the low-pass filter.

7. Computer program which is set up to carry out the steps of the method according to one of the preceding claims.

8. Electronic storage medium on which a computer program according to the preceding claim is stored.

9. Electronic storage medium according to the preceding claim, on which at least one value for a time constant for an occurrence of a charge displacement in a sensor element (110), determined according to the method according to one of Claims 3 to 6, is stored.

10. Control unit which comprises an electronic storage medium according to one of the two preceding claims.

11. Device for detecting a proportion of a gas component from a gas mixture in a measuring gas chamber, comprising a sensor element (110) which has at least one cell (114), the cell (114) comprising at least a first electrode (116), at least a second electrode (118) and at least a solid electrolyte (120) connecting the first electrode (116) and the second electrode (118), wherein the device further has a control unit according to the preceding claim.

## Revendications

1. Procédé de détermination d'une résistance interne d'un élément capteur (110) destiné à détecter une part d'une composante gazeuse à partir d'un mélange gazeux dans un espace de gaz de mesure, l'élément capteur (110) disposant d'au moins une cellule (114), la cellule (114) comportant au moins une première électrode (116), au moins une deuxième électrode (118) et au moins un électrolyte solide (120) qui relie la première électrode (116) et la deuxième électrode (118), une tension électrique (124) étant appliquée entre la première électrode (116) et la deuxième électrode (118), comprenant les étapes suivantes :
a) sollicitation de l'élément capteur (110) avec une impulsion de courant (130), l'impulsion de courant (130) provoquant un transfert de charge dans l'élément capteur (110), la survenance du transfert de charge produisant une augmentation de la tension électrique (124) entre la première électrode (116) et la deuxième électrode (118),
b) détermination d'une valeur pour l'augmentation de la tension électrique (124) entre la première électrode (116) et la deuxième électrode (118) ;
l'étape b) étant exécutée au moins deux fois à des instants différents pendant la survenance du transfert de charge et une valeur pour l'augmentation de la tension électrique (124) étant respectivement identifiée à partir de cela aux différents instants, et l'étape c), **caractérisée en ce que** celle-ci est exécutée comme suit :
c) détermination de la résistance interne de l'élément capteur (110) à partir des valeurs pour l'augmentation de la tension électrique (124) identifiées aux différents instants pendant la survenance du transfert de charge ; et une part (138) de l'augmentation de la tension électrique (124), liée à la polarisation, étant identifiée à partir des valeurs pour l'augmentation de la tension électrique (124) identifiées aux différents instants pendant la survenance du transfert de charge, la résistance interne de l'élément capteur (110) étant déterminée par une soustraction de la part liée à la polarisation (138) de l'augmentation de la tension électrique (124) aux valeurs identifiées pour l'augmentation de la tension électrique (124).

2. Procédé selon l'une des revendications précédentes, **caractérisé en ce qu'**une constante de temps pour la survenance du transfert de charge dans l'élément capteur (110) est déterminée à partir des valeurs pour l'augmentation de la tension électrique (124) identifiées aux différents instants pendant la survenance du transfert de charge.

3. Procédé selon la revendication précédente, **caractérisé en ce que** la constante de temps pour le survenance du transfert de charge dans l'élément capteur (110) est déterminée pendant une période pendant laquelle une influence d'autres facteurs sur la tension électrique (124) entre la première électrode (116) et la deuxième électrode (128) est négligeable ou exclue.

4. Procédé selon l'une des deux revendications précédentes, **caractérisé en ce que** la constante de temps déterminée pour la survenance du transfert de charge dans l'élément capteur (110) est enregistrée dans un support de mémorisation électronique et utilisée pour au moins une détermination suivante de la résistance interne de l'élément capteur (110).

5. Procédé selon l'une des trois revendications précédentes, **caractérisé en ce qu'**une durée de l'impulsion de courant (130) avec laquelle est sollicité l'élément capteur (110) est réglée de telle sorte que la durée de l'impulsion de courant (130) dépasse une longueur de la constante de temps pour la survenance du transfert de charge dans l'élément capteur (110).

6. Procédé selon l'une des revendications précédentes, **caractérisé en ce que** l'élément capteur (110) est relié à une unité de commande par le biais d'un filtre passe-bas, le filtre passe-bas possédant une constante de temps associée, un premier instant pour une identification d'une première valeur pour l'augmentation de la tension électrique (124) étant choisi de telle sorte que le premier instant correspond au moins au triple, de préférence au moins au quintuple de la constante de temps du filtre passe-bas.

7. Programme informatique, qui est conçu pour exécuter les étapes du procédé selon l'une des revendications précédentes.

8. Support de mémorisation électronique, sur lequel est enregistré un programme informatique selon la revendication précédente.

9. Support de mémorisation électronique selon la revendication précédente, sur lequel est enregistrée au moins une valeur déterminée conformément au procédé selon l'une des revendications 3 à 6 pour une constante de temps pour une survenance d'un transfert de charge dans un élément capteur (110).

10. Unité de commande, laquelle comporte un support de mémorisation électronique selon l'une des deux revendications précédentes.

11. Arrangement de détection d'une part d'une composante gazeuse à partir d'un mélange gazeux dans un espace de gaz de mesure, comprenant un élément capteur (110) qui dispose d'au moins une cellule (114), la cellule (114) comportant au moins une première électrode (116), au moins une deuxième électrode (118) et au moins un électrolyte solide (120) qui relie la première électrode (116) et la deuxième électrode (118), l'arrangement possédant en outre une unité de commande selon la revendication précédente.
